**Europäisches Patentamt**

(19) **European Patent Office**

**Office européen des brevets**

(11) Numéro de publication: **0 089 277**

**B1**

(12) **FASCICULE DE BREVET EUROPÉEN**

(45) Date de publication du fascicule du brevet:
04.02.87

(21) Numéro de dépôt: **83400470.7**

(22) Date de dépôt: **07.03.83**

(51) Int. Cl.⁴: **G 11 B 21/12,** G 11 B 5/54

(54) **Dispositif de chargement de corps principal de plate-forme comportant au moins un transducteur de lecture/écriture d'un support d'informations.**

(30) Priorité: **15.03.82 FR 8204349**

(43) Date de publication de la demande:
**21.09.83 Bulletin 83/38**

(45) Mention de la délivrance du brevet:
**04.02.87 Bulletin 87/6**

(84) Etats contractants désignés:
**DE GB IT NL SE**

(56) Documents cité:
**FR-A-2 089 595**
**FR-A-2 284 952**

**IBM TECHNICAL DISCLOSURE BULLETIN, vol 15,
no. 9, février 1973, page 2750, New York US, R.A.
WILKINSON jr.: "Retraction device for magnetic
transducer assembly"
ELEKTRONISCHE RUNDSCHAU, vol. 11, no 4, 1957,
pages 109-118, Berlin DE, O. SCHRÖTER: "Der
Magnetplatten-Speicher"**

(73) Titulaire: **BULL S.A., 121, Avenue de Malakoff,
F-75016 Paris (FR)**

(72) Inventeur: **Barski, Guy, 11 rue Cesar Franck,
F-75015 Paris (FR)**

(74) Mandataire: **Gouesmel, Daniel, BULL S.A. Division
de la Propriété Industrielle 25, avenue de la
Grande- Armée, F-75016 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif de chargement de corps principaux de plate-forme comportant au moins un transducteur de lecture/écriture d'un support d'informations.

L'invention se rapporte au domaine technique des mémoires à disques magnétiques. Des mémoires de ce type sont bien connues dans le domaine du traitement de données. Elles comportent ordinairement un ou plusieurs disques à revêtement magnétique qui sont montés sur une unité de commande pour enregistrer les données sur leur surface, et ensuite pour lire et mettre à jour ces données selon le cas. Lorsque la mémoire comporte plusieurs disques, ils sont superposés et de même axe de rotation.

Les informations sont inscrites sur des pistes concentriques par des transducteurs de lecture/écriture qui se déplacent à leur surface.

Ces transducteurs sont disposés sur une plate-forme qui est déplacée radialement au-dessus de la surface du disque au moyen d'un actionneur linéaire ou rotatif afin que les transducteurs puissent accéder à toutes informations contenues sur celui-ci. La plateforme elle-même se compose de deux parties essentielles, à savoir d'une part, une partie appelée "corps principal" de la plate-forme qui comprend les transducteurs et d'autre part, un dispositif de suspension dont une extrémité est solidaire du corps principal et l'autre extrémité solidaire d'un bras amovible rigide.

Les transducteurs comportent des fils électriques d'entrée et/ou de sortie connectés aux circuits électroniques d'écriture et/ou lecture de la mémoire à disque à laquelle ils appartiennent.

Généralement, le corps principal d'une plate-forme a la forme d'un parallélépipède rectangle relativement plat dont la face inférieure comporte les transducteurs pour capter et/ou enregistrer les informations. La grande face supérieure contient les extrémités des fils électriques d'entrée et/ou de sortie à des transducteurs et les moyens permettant de connecter ces fils au circuits électroniques de lecture et/ou écriture de la mémoire à disque.

Dans la pratique courante, la face inférieure du corps principal comporte une ou plusieurs gorges, dont la profondeur peut atteindre jusqu'à quelques dixièmes de millimètres. Il en résulte l'existence sur cette face de plusieurs parties saillantes que l'on appelle "patins" et qui ont généralement la forme de skis.

Une plate-forme de ce genre est décrite dans le brevet français n° 2 426 943 déposé le 26 Mai 1978 pour "Plate-forme d'au moins un transducteur de lecture et/ou d'enregistrement d'un support d'informations".

La rotation des disques provoque l'existence entre la face inférieure du corps principal de la plate-forme et la face du disque associé à celle-ci d'un coussin d'air comprimé qui empêche le corps principal de toucher le disque et par suite de le détériorer. On dit alors que le corps principal, et par extension la plate-forme, vole au-dessus de la face du disque qui lui est associée à une distance de quelques dixièmes de microns. Cette distance entre la face du corps principal qui regarde le disque et le disque lui-même, est appelée hauteur de vol.

Le coussin d'air exerce une pression sur la face des patins normalement à celle-ci et dirigé de la face inférieure vers la face supérieure du corps principal de la plate-forme. L'équilibre dynamique de la plate-forme en vol est obtenu en opposant à la force créée par la pression du coussin d'air sur la surface des patins une force dite "force de chargement" dirigée en sens inverse, appliquée sur la face supérieure du corps principal et de module égal à celui de la force de pression.

La force de chargement est généralement fournie par un ressort précontraint solidaire du bras rigide de l'actionneur qui porte la plate-forme. Cette force de chargement est relativement faible, de l'ordre de 10 à 20 grammes.

Cependant, un problème délicat à résoudre ést celui de la mise en vol du corps principal. En effet, lorsque la mémoire à disques ne fonctionne pas, le corps principal de la plate-forme se trouve dans une position située au voisinage de la périphérie du disque en dehors de cette surface, et appelée position de repos. Par "phase de mise en vol", on entend l'étape transitoire pendant laquelle le corps principal se déplace de sa position de repos jusqu'au moment où il est en vol stable, à quelques dixièmes de micron de hauteur au-dessus de la surface du disque. La phase de mise en vol est délicate en raison principalement des turbulences de l'air au voisinage de la surface du disque, particulièrement lorsque la mémoire comporte plusieurs disques.

La zone délimitée par deux cercles concentriques au disque passant l'un par la position de repos du corps principal de la plateforme et l'autre par le point de la surface du disque où ce corps principal est en vol stable s'appelle la zone d'approche, ou zone de mise en vol. C'est dans cette zone que le corps principal s'abaisse vers le plan du disque jusqu'à atteindre sa hauteur de vol.

On connaît, selon l'art antérieur, des dispositifs de chargement de têtes magnétiques pour disques qui comportent un bras amovible rigide, auquel est fixée une lame de ressort flexible de charge. A l'état libre, cette lame de ressort est cintrée. Elle porte la plate-forme, à son extrémité. Le cintrage de la lame du ressort flexible est déterminé de manière à produire une force d'application de la tête magnétique sur le disque.

Le problàme à résoudre consiste alors à fléchir la lame flexible qui porte la tête pendant que l'actionneur se déplace, radialement ou angulairement selon le cas, jusqu'à la zone de lecture du disque et ce relâcher progressivement cette flexion jusqu'à ce que la force de chargement exercée par la lame flexible formant ressort soit équilibrée par le coussin d'air comprimé qui se forme dynamiquement sous les patins de la tête de lecture.

Selon un premier art antérieur connu, la lame ce ressort flexible comporte deux rampes symétriques. Ces rampes coopèrent avec des appuis fixes montés sur le bâti qui agissent comme un profil de came vis-à-vis des rampes symétriques, de manière à lever ou à baisser la lame flexible lorsque le bras amovible est déplacé par rapport au disque. On réalise ainsi le chargement ou le déchargement de la tête de lecture/écriture.

On connaît un autre dispositif de chargement de corps principal de plate-forme décrit dans l'IBM Technical Disclosure Bulletin Vol. 15 N° 9 de Février 1973. Ce dispositif permet de charger (ou de décharger) deux corps principaux de plate-forme destinés à venir s'insérer dans un espace inter disques, chacun de ces corps principaux étant associé à une face d'un disque, les faces de disques associées à ces deux corps principaux étant disposées en regard l'une de l'autre. Chaque corps principal est solidaire d'une lame de ressort flexible. L'extrémité des deux lames de ressort flexibles associées aux deux corps principaux est en forme de rampe. Les deux rampes des deux lames sont symétriques. Le dispositif de chargement de ces corps principaux comprend un dispositif rétractable disposé entre les deux rampes et qui comporte des profils en biseau définissant deux profils de cames. Chacun de ces deux profils vient coopérer avec une des deux rampes de manière à exercer sur celle-ci une force parallèle à la surface du support provoquant la flexion de l'autre extrémité de la lame flexible correspondante, de telle sorte que cette dernière se déplace sensiblement perpendiculairement à la face du disque associée au corps principal coopérant avec cette lame flexible. Ainsi on peut dire que le dispositif rétractable constitue des moyens de déformation de la paire de lames flexibles permettant à l'extrémité de ces dernières de se déplacer sensiblement perpendiculairement aux supports d'informations constitués par les deux faces des disques en regard l'une de l'autre.

La tendance actuelle du développement des mémoires à disques est de diminuer l'encombrement de celles-ci, ce qui nécessite en particulier la miniaturatisation des dispositifs de chargement des corps principaux de plate-forme. Or, il est délicat de miniaturiser les dispositifs de chargement de l'art antérieur tels que ceux qui viennent d'être décrits, en particulier il devient de plus en plus délicat de réaliser aussi bien les profils de cames que les rampes des lames lorsque la largeur de celles-ci diminue. Par ailleurs, les dispositifs de chargement selon l'art antérieur sont difficilement applicables aux actionneurs rotatifs, car il est nécesaire de prévoir le déplacement du bras amovible et on ne dispose pas de l'espace nécessaire soit pour installer des appuis fixes montés sur le bâti comme dans le premier art antérieur connu, soit pour placer le dispositif rétractable comme dans le second art antérieur connu (IBM Technical Disclosure Bulletin).

La présente invention permet de remédier aux inconvénients selon l'art antérieur et concerne un dispositif de chargement qui peut être miniaturisé plus aisément que les dispositifs de l'art antérieur. Cela permet donc une réduction de l'espace inter disques et par suite de l'encombrement de mémoires à disques elles-mêmes.

Selon l'invention, le dispositif de chargement de corps principal de plate-forme comportant au moins un transducteur de lecture/écriture d'un support d'informations, comprenant au moins une paire de lames de ressort flexibles dont chacune est fixée à un bras rigide par l'une de ses extrémités et supporte à son autre extrémité une plate-forme se composant d'un corps principal et d'une suspension, les lames flexibles produisant une force de charge du corps principal sur le support, et des moyens de déformation de la paire de lames flexibles permettant d'exercer sur la première extémité de chacune des lames une force parallèle à la surface du support provoquant la flexion de l'autre extrémité de manière à ce que chaque lame se déplace sensiblement perpendiculairement au support d'informations, est caractérisé en ce que ces moyens de déformation sont constitués d'au moins un fil en contact par sa première extrémité avec la première extrémité des lames flexibles et par sa seconde extrémité avec des moyens de commande de ce fil lesquels exercent ainsi sur ce dernier une force de traction parallèle à la surface du support et transmise par ce fil à la première extrémité des lames flexibles.

D'autre caractéristiques et avantages de l'invention apparaîtront encore à la lecture de la description qui suit, donnée à titre d'exemples purement illustratifs et nullement limitatifs, en référence aux dessins annexés sur lesquels:
- la figure 1 réprésente une une vue en perspective d'un actionneur linéaire qui illustre l'art antérieur;
- les figures 2a et 2b illustrent le fontionnement du dispositif de la figure 1.
- la figure 3 représente une vue de dessus d'un actionneur rotatif qui porte un système de chargement conforme à l'invention;
- la figure 4 représente une section longitudinale du bras rotatif représenté sur la figure 3;
- la figure 5 illustre les moyens conformes à l'invention qui permettent en vol les têtes de lecture;
- la figure 6 est une vue en perspective des moyens de mise en vol de la tête de lecture.

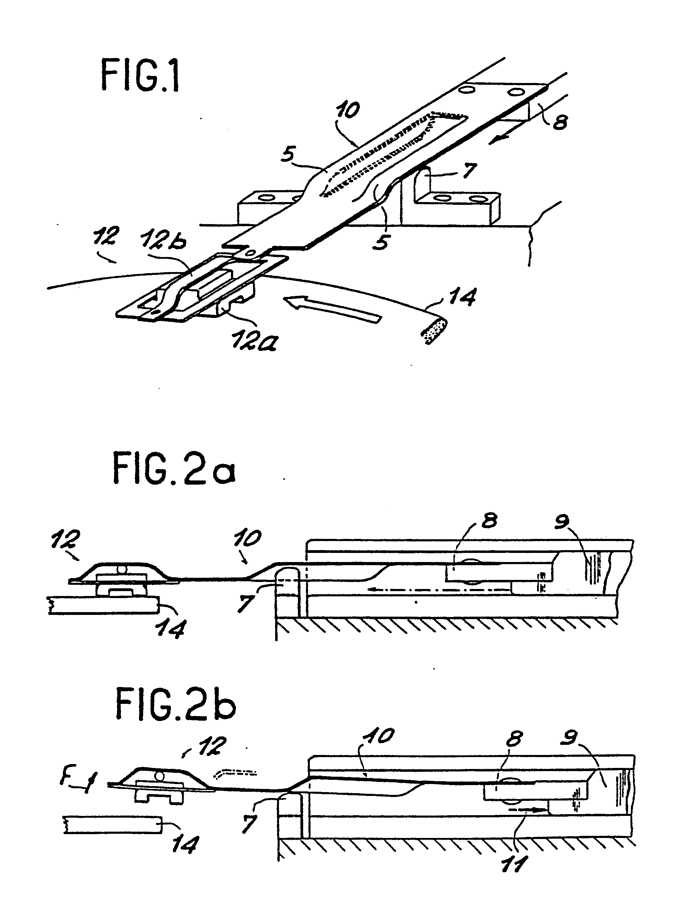

On a représenté sur la figure 1, une vue en perspective d'un dispositif de chargement des têtes magnétiques de l'art antérieur. Il se compose d'un support 8 solidaire d'un bras rigide 9 (voir figures 2a et 2b). Le bras rigide est lui-même déplacé en translation au moyen d'un actionneur linéaire mû par un moteur électrique. Une lame flexible 10 est fixée au support 6. La lame flexible 10 comporte deux rampes symétriques 5. A son extrémité, elle porte une plate-forme 12. La plate-forme 12 se compose d'un corps principal 12a et d'une suspension 12b. Le corps principal 12a contient au moins un transducteur de lecture/écriture permettant de lire ou d'inscrire des données sur le disque magnétique 14.

Le dispositif comporte également deux appuis fixes 7 montés sur le bâti. Ces appuis coopèrent avec les rampes 5.

La figure 2 illustre le fonctionnement de ce dispositif. Sur la figure 2a, la tête 12 est en vol. La lame 10 exerce une force d'appui de la tête 12 sur le disque 14. Il n'y a pas contact entre la lame 10 et les deux supports 7.

La figure 2B illustre le relèvement de la tête de lecture. Pour cela, on déplace en translation le bras de support rigide selon le sens de la flèche 11 et donc le support 8 qui porte la lame flexible 10.

Les deux rampes symétriques 5 formant profil de came montent alors sur les appuis fixes 7, ce qui soulève la plate-forme 12 selon le sens de la flèche f audessus du plan du disque 14.

La mise en vol de la tête de lecture s'effectue en sens inverse, en avançant le chariot linéaire vers le disque. Les deux rampes symétriques 5 descendent alors sur les appuis 7. Au fur et à mesure que la plate-forme 12 se rapproche de la face du disque 14, la portance de la plate-forme augmente progressivement. Lorsque la tête a atteint la hauteur de vol, la force de chargement donnée par la lame flexible 10 est entièrement équilibrée par la portance de la plate-forme ou tête de lecture. A ce moment là, il n'y a plus contact entre la lame flexible et les deux appuis 7.

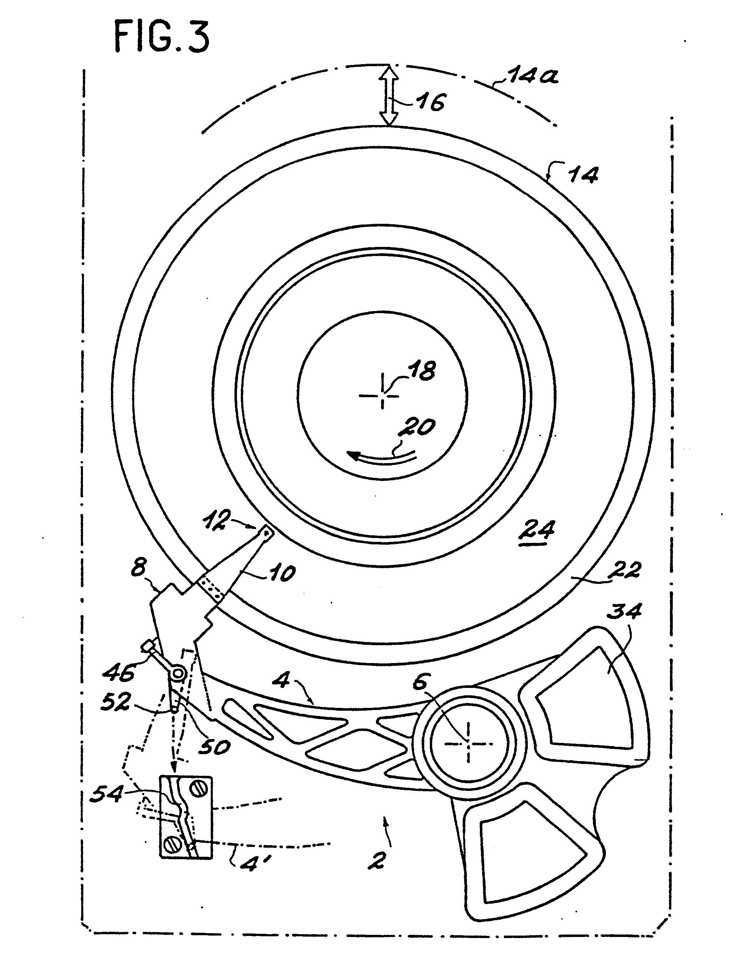

On a représenté sur la figure 3, un actionneur rotatif qui porte un dispositif de chargement réalisé selon l'invention.

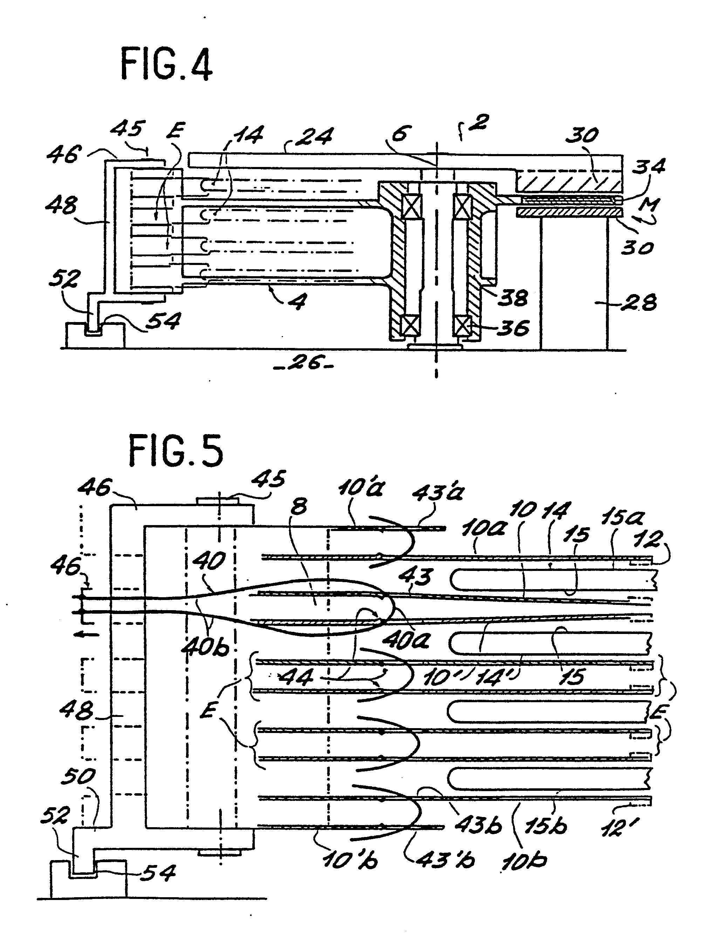

L'actionneur rotatif représenté sur la figure 3 a été désigné par la référence générale 2. Il est constitué par un bras 4 et un moteur d'entraînement M (voir figure 4). Le bras 4 pivote autour d'un axe verical 6.

Un bras rotatif tel que le bras 4 permet de diminuer d'un facteur 10 l'inertie de l'actionneur par rapport à celle d'un actionneur linéaire. Pour réduire encore cette inertie, le bras possède une structure de caisson ajouré en alliage moulé de faible épaisseur.

On obtient ainsi une structure très légère et très rigide.

Au bout du bras 4 est fixé au moins un support 8 qui porte deux lames 10, montées de part et d'autre, dont une seule, la lame supérieure, est visible sur la figure. Au bout de la lame flexible 10 se trouve une tête analogue à celle des figures 1 et 2 dont le corps principal 12a comporte au moins un transducteur de lecture/écriture des informations contenues sur le disque magnétique 14.

A chaque face 15 d'un disque, on associe un transducteur. Dans la suite de la description, l'expression "face du disque" impliquera l'association de celle-ci à un transducteur.

La corps principal est monté sur cardan constitué par une bille centrale. Il s'autopositionne par rapport au coussin d'air qui existe entre lui et le disque.

Le disque 14 est amovible, comme schématise par la flèche 16. On a schématisé par la ligne 14a, en trait mixte, le contour extérieur du disque 14 au cours de son introduction ou de son enlèvement. Une fois mis en place, le disque 14 est rendu solidaire d'un dispositif d'entrainement autour de l'axe vertical 18 selon le sens de la flèche 20. La vitesse de rotation constante du disque est de par exemple 3600 tours par minute.

La zone de mise en vol, dans laquelle le corps principal part de sa position de repos puis s'abaisse vers le plan du disque jusqu'à atteindre sa hauteur de vol, a été désignée par la référence 22. Le corps principal 12 comporte des patins (non représentés) sous lesquels s'engage l'air mis en mouvement par la rotation du disque, ce qui maintient le corps principal à une hauteur déterminée au-dessus du plan du disque. Cette hauteur est appelée hauteur de vol. Dans le cas de l'exemple de réalisation représenté, elle est de 0,3 micron.

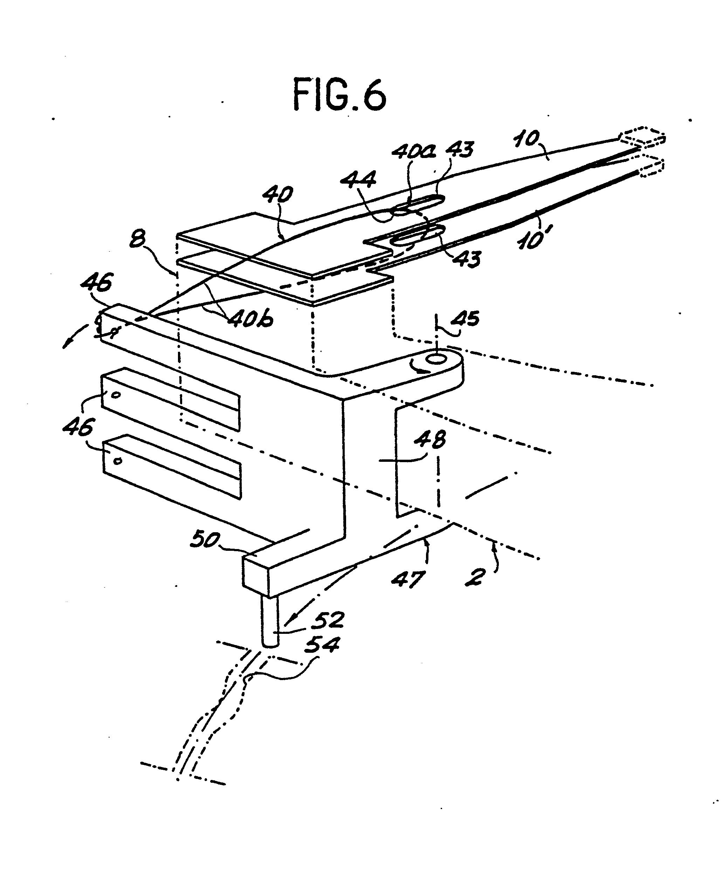

Sur les dessins, il importe peu pour la compréhension de l'invention, de représenter le détail de la plate-forme qui, en toute rigueur, est composée, comme représenté sur les figures 1 et 2, d'un corps principal 12a et d'une suspension 12b. C'est pourquoi sur les figures 3 à 6 et dans la description correspondante, on a désigné le corps principal par la référence 12 au lieu de la référence 12a.

Le bras 10 est une lame métallique flexible qui agit comme un ressort. Il exerce une force d'appui déterminée du corps principal sur le disque. Cette force d'appui, variable selon les applications, peut varier de 10 à 30 g.

Comme on peut le voir sur la figure 4, l'actionneur est monté dans un étrier de contre-inertie composé par une plaque supérieure 24 et une plaque inférieure épaisse en acier 26. Cet étrier est muni des aimants permanents 28 et des masses polaires 30 du moteur M. Les deux masses polaires 30 déterminent son entrefer.

Les bobines 34 du moteur M sont noyées par inclusion sous vide de polycarbonate. Elles se déplacent dans l'entrefer.

Le palier qui constitue l'axe de pivotement 6 du dispositif de chargement est constitué par deux roulements 32 à gorges profondes chargés d'une précontrainte afin d'annuler tous les jeux intempestifs.

Les parties massives de ce bras, comme l'alésage 38 dans lequel sont logés les deux roulements 36 sont ramassées à proximité de l'axe de rotation 6. Par conséquent, leur moment d'inertie par rapport à cet axe est faible. En outre, ces masses permettent l'équilibrage du bras. Comme on peut le voir sur les figures 4 et 5, le bras 4 comporte plusieurs corps principaux dont les transducteurs permettent d'inscrire des informations ou de les lire sur plusieurs pistes. Dans l'exemple représenté, il y a quatre disques 14 superposés. Les plate-formes et les bras flexibles 10 sont introduits entre les disques pendant le pivotement du bras rotatif 4. Ce bras rotatif a été représenté en positon de lecture sur la figure 3 et schématisé en trait mixte en position écartée en 4'.

Lorsque le bras est en position reculée 4', les lames flexibles 10 sont au repos. Lorsqu'elles sont introduites entre les disques, elles exercent une force d'appui prédéterminée du corps principal 12 sur le plan du disque. Pour permettre l'introduction des corps principaux entre les disques, il est donc nécessaire de les rapprocher afin qu'elles puissent pénétrer entre es disques sans les heurter.

Comme on l'a rappelé précédemment, les dispositifs connus, en particulier ceux qui comportent un actionneur linéaire, sont équipés de deux rampes symétriques disposées de ârt et d'autre des bras flexibles. Ces rampes appliquent le coprs principal contre la surface du disque.

L'invention propose un dispositif de chargement de corps principaux de plate-formes d'un type différent qui peut être utilise avec un bras rotatif tel que le bras 4 (ou un bras linéaire).

L'invention utilise des moyens de déformation d'au moins un fil (40) exerçant sur la première extrémité d'au moins une lame (10) une force parallèle à la surface du support provoquant la flexion de l'autre extrémité de manière à ce que celle-ci se déplace sensiblement perpendiculairement au support d'informations.

De préférence, les lames flexibles étant disposées par paires, comme on le voit sur la fig. 4, on agit sumultanément sur les extrémités de deux lames flexibles de manière à les rapprocher l'une de l'autre. De cette manière les réactions perpendiculaires au plan de la lame s'équilibrent et on supprime la nécessité de disposer d'un appui fixe tel que l'appui 7 de l'art antérieur.

Les moyens pour agir sumultanément sur les extrémités de deux lames flexibles sont constitués conformément à l'invention, par deux profils de came inclinés qui agissent sur un rebord de chaque lame flexible et par des moyens pour déplacer ces profils de came par rapport aux rebords des lames flexibles. Le profil de came exerce sur la lame flexible une action qui peut être décomposée en ume composante dirigée selon la lame flexible et une composante perpendiculaire à la lame flexible. La première composante est équilibrée par la réaction du support 8. La deuxième composante produit l'effet recherché de rapprochement des deux lames flexibles.

Comme on peut le voir sur la figure 5 les profils des cames inclinées sont constitués par un fil fin d'acier 40 qui forme une boucle. Le fil 40 est disposé dans l'axe de la lame flexible. L'extrémité 40a de la boucle est passée dans deux boutonnières 43 pratiquées dans l'axe des lames flexibles 10. L'extrémité 40a joue la fonction d'une came en s'appuyant sur les bords 44 de la boutonnière 43.

Cependant, on pourrait utiliser à la place du fil 40, tout autre moyen jouant le même rôle tel qu'une ceinture ou des crochets.

Lorsqu'on exerce une traction sur les extrémités 40b du fil d'acier 40, on fléchit les deux lames 10, ce qui rapproche les corps principaux 12 et 12' l'un de l'autre. De cette manière, ils peuvent être introduits dans l'espace qui sépare les deux disques 14 et 14' auxquels ils sont associés. Cet espace est appelé l'espace inter-disques e. Dans l'exemple décrit il est de 5 mm.

De cette manière, les corps principaux 12 et 12' peuvent être introduits dans l'espace inter-disques e sans heurter la périphérie du disque au moment de leur introduction. Une fois les corps principaux introduits dans l'espace inter-disques, on relâche progressivement la traction sur les extrémités 40b si bien qu'ils se rapprochent progressivement des faces du disque 15 et 15' auxquelles ils sont associés.

On a représenté à la partie inférieure de la figure 5 une boucle 40 à l'état relâché. La traction sur les extrémités 40b est nulle. En conséquence, le fil 40 n'exerce aucun effort sur les rebords 44 des boutonnières de ces deux lames. Cependant, les lames ne sont pas revenues tout à fait à leur position libre, puisque c'est leur flexion qui détermine la charge des corps principaux. Dans cette position, ceux-ci sont en vol à une hauteur de quelques dixièmes de micron au-dessus de la face du disque auquel ils sont associés. La poussée exercée sur les patins des corps principaux par le coussin d'air provoqué par la rotation du disque qui équilibre la force de charge créée par les lames flexibles. Dans cette position, la mise en vol des corps principaux est achevée.

Il est entendu que le dispositif de chargement s'applique également à la face supérieure 15a du disque placé au-dessus de la pile et à la face inférieure du disque 15b placé en-dessous de la pile. Ces deux faces 15a et 15b constituent un cas particulier parce que le corps principal 12 qui leur est associé ne fait pas partie d'un couple comme les corps principaux 12 et 12'. De la même maniàre, les lames flexibles 10a et 10b qui portent ces transducteurs ne font pas partie d'un couple. C'est pourquoi on a prévu deux lames flexibles 10'a et 10'b associées respectivement aux lames 10a et 10b. Ces lames sont plus courtes parce qu'elles ne portent pas de corps principal. Cependant, elles comportent chacune une boutonnière pratiquée dans leur axe, respectivement 43'a et 43'b, dans lesquelles sont passés des fils 40 (non représentés, pour ne pas surcharger la figure) qui agissent exactement de la même manière que les fils 40 décrits pour les couples 12 et 12'. Ainsi, ces moyens permettent la mise en vol des corps principaux 12 et 12'.

La dispositif de chargement qui vient d'être décrit peut être miniaturisé beaucoup plus aisément qu'un dispositif de l'art antérieur comportant deux rampes symétriques. En effet, au fur et à mesure que l'on réduit les dimensions des lames flexibles 10, il devient de plus en plus délicat de réaliser les deux rampes 5 parce que la largeur de la lame diminue.

Au contraire, le dispositif de chargement de l'invention comporte des moyens pour agir sur les extrémités des lames qui sont disposées dans l'axe de chaque lame 10 ce qui nécessite beaucoup moins de place que les rampes de l'art antérieur. En particulier, lorsque ces moyens sont constitués par un fil passé en boucle dans deux boutonnières pratiquées dans l'axe de chaque lame, on peut réduire de façon importante les dimensions des lames sans difficulté particulière. Ceci permet la réduction des dimensions du dispositif de chargement et donc de l'espace inter-disques, et par suite de l'encombrement de la mémoire elle-même.

L'invention concerne également des moyens pour exercer une traction sur les extrémités 40b des boucles 40. Ces moyens sont constitués par un cavalier 47 visible en perspective sur la 4. Le cavalier 47 est monte a l'extrémité du bras 40. Il pivote autour d'un axe vertical 44. Le cavalier 47 comporte une pluralité de leviers horizontaux 46 fixés perpendiculairement à sa branche verticale 48 (voir figure 3). Il y a autant de leviers 46 que de boucles 40. Dans l'exemple représenté sur les figures 3 à 5, il y a donc cinq leviers 46. Les extrémités 40b de chaque boucle 40 sont fixées sur le levier 46 situé à leur niveau.

Le cavalier 47 comporte également un levier 50 dont l'extrémité coopére avec un profil de came solidaire du support de l'actionneur. Ce levier 50 fait pivoter le cavalier 47 pendant le passage du bras rotatif 4 dans la zone de mise en vol 22 de manière à exercer une traction sur les extrémités 40b des boucles 40.

Afin de diminuer l'inertie du bras, le cavalier 47 est de conception très légère, en matière plastique.

De préference, le levier 50 porte a son extrémité un téton 52. Le profil de came est alors constitué par une rainure 54 dont on peut apprécier la forme sur la figure 1. Le téton 52 se déplace dans cette rainure. La forme de la rainure 54 donne la maîtrise de la vitesse d'approche des corps principaux 12 de la face du disque par le truchement du mouvement du cavalier 47 et de la rapidité d'ouverture des boucles 40.

Le déchargement des corps principaux s'effectue dans l'ordre inverse. Le recul du bras 4 engage le téton 52 dans la rainure 54. Le mouvement de pivotement qui en résulte exerce une traction sur les boucles 40 qui s'aplatissent, et par suite soulèvent les corps principaux au-dessus de la surface du disque. Lorsque les corps principaux sont dégagés des disques, un mouvement de rotation en sens inverse du cavalier se produit. Ce mouvement relâche la traction sur les fils. Les lames flexibles 10 et 10' reviennent à leur position de repos.

## Revendications

1. Dispositif de chargement de corps principal de plate-forme comportant au moins un transducteur de lecture/écriture d'un support d'informations (14, 15), comprenant au moins une paire de lames de ressort flexibles (10) dont chacune est fixée à un bras rigide (4) par l'une de ses extrémités et supporte à son autre extrémité une plate-forme (12) qui se compose d'un corps principal (12a) et d'une suspension (12b), chacune des lames flexibles produisant une force de charge du corps principal sur le support, et des moyens de déformation (47, 46, 50, 40) de la paire de lames flexibles permettant d'exercer sur la première extrémité de chacune des lames, une force parallèle à la surface du support provoquant la flexion de l'autre extrémité de celle-ci, de manière à ce que la lame se déplace sensiblement perpendiculairement au support d'informations, caractérisé en ce que ces moyens de déformation sont constitués d'au moins un fil (40) en contact par sa première extémité (40a) avec la première extrémité (boutonniére 43) des lames flexibles (10) et par sa seconde extrémité (40b) avec des moyens de commande de ce fil (47, 46, 43, 50) lesquels exercent ainsi sur le fil une force de traction parallèle à la surface du support qui est transmise par ce dernier à la première extrémité (boutonniére 43) des lames flexibles (10).

2. Dispositif selon la revendication 1, caractérisé en ce que les moyens de commande du fil (40) sont constitués par:
   - un cavalier (47) monté pivotant à l'extérmité du bras (4);
   - des leviers (46) solidaires du cavalier (47) auxquels sont fixés les deux extémités du fil (40);
   - des moyens (50) de commande en rotation du cavalier (47).

3. Dispositif selon la revendication 2, caractérisé en ce que les moyens de commande en rotation du cavalier (47) sont constitués par un levier (50) solidaire du cavalier (47) dont l'extrémité coopére avec un profil de came solidaire du support pour faire pivoter le cavalier (47) pendant le passage du bras (4) dans la zone de mise en vol, de manière à exercer une traction sur les extrémités du fil (40).

4. Dispositif de chargement selon la revendication 3, caractérisé en ce que le levier (50) porte à son extrémité un téton (52) qui se déplace dans une rainure (54) formant une came.

5. Dispositif de chargement selon la revendication 4, carctérisé en ce que la forme de la rainure (54) formant la came donne la maîtrise de la vitesse d'approche des têtes du disque par le truchement du cavalier et de la rapidité d'ouverture des boucles.

6. Actionneur rotatif, pour le positionnement de corps principaux (12a) de plate-forme (12) au- dessus d'un support (14) comportant un bras pivotant (4) mû par un moteur (M), caractérisé en ce qu'il comporte un dispositif de chargement des corps principaux (12) réalisé selon la revendication 1.

**Patentansprüche**

1. Vorrichtung zur Beaufschlagung des Hauptkörpers einer Platine, welche wenigstens einen Schreib/Lese-Wandler für einen Informationsträger (14,15) umfaßt, mit wenigstens zwei flexiblen Blattfedern (10), die jeweils an einem starren Arm (4) an einem ihrer Enden befestigt sind und an ihrem anderen Ende eine Platine (12) tragen, welche aus einem Hauptkörper (12a) und einer Aufhängung (12b) zusammengesetzt ist, wobei jede flexible Blattfeder eine Kraft zur Beaufschlagung des Hauptkörpers gegen den Träger erzeugt, und mit Deformiermitteln (47, 46, 50, 40) für die Deformierung der zwei flexiblen Blattfedern, die es gestatten, auf das erste Ende jeder dieser Blattfedern eine Kraft parallel zur Oberfläche des Trägers auszuüben, welche eine Biegeauslenkung des anderen Endes derselben verursacht, so daß diese Blattfeder sich im wesentlichen senkrecht zu dem Informationsträger bewegt, dadurch gekennzeichnet, daß diese Deformiermittel aus wenigstens einem Draht (40) gebildet sind, der an seinem ersten Ende (40a) mit dem ersten Ende (Schitz 43) der flexiblen Blattfedern (10) und an seinem zweiten Ende (40b) mit Steuermitteln (47, 46, 43, 50) zur Steuerung dieses Drahtes in Berührung steht, welche auf diese Weise auf den Draht eine Zugkraft parallel zu der Trägeroberfläche ausüben, die durch ihn auf das erste Ende (Schlitz 43) der flexiblen Blattfedern (10) übertragen wird.

2. Vorrichtung nach Anspruch 1, dadurch gekennzeichnet, daß die Mittel (40) zur Steuerung des Drahtes gebildet sind durch:
- einen schwenkbar am Ende des Armes (4) angebrachten Reiter (47);
- Hebel (46), die fest mit dem Reiter (47) verbunden sind und an denen die zwei Enden des Drahtes (40) befestigt sind;
- Mittel (50) zur Steuerung des Reiters (47) für eine Drehbewegung.

3. Vorrichtung nach Anspruch 2, dadurch gekennzeichnet, daß die Mittel zur Steuerung des Reiters (47) für eine Drehbewegung aus einem Hebel (50) gebildet sind, der fest mit dem Reiter (47) verbunden ist und dessen Ende mit einem Nockenprofil zusammenwirkt, welches fest mit dem Träger verbunden ist, um den Reiter (47) während des Übergangs des Armes (4) in die Zone zu verschwenken, in welcher die Versetzung in den Flugzustand erfolgt, so daß eine Zugkraft auf diese Enden des Drahtes (40) ausgeübt wird.

4. Beaufschlagungsvorrichtung nach Anspruch 3, dadurch gekennzeichnet, daß der Hebel (50) an seinem Ende einen Zapfen (52) trägt, der sich in einer Rille (54) bewegt, die eine Steuerkurve bildet.

5. Beaufschlagungsvorrichtung nach Anspruch 4, dadurch gekennzeichnet, daß die Form der Rille (54), welche die Steuerkurve bildet, über die Wirkung des Reiters (47) und die Öffnungsschnelligkeit der Schleifen eine Beherrschung der Annäherungsgeschwindigkeit der Köpfe an die Platte ergibt.

6. Drehantrieb für die Positionierung des Hauptkörpers (12a) einer Platine (12) über einen Träger (14), mit einem Schwenkarm (4), der durch einen Motor (M) bewegt wird, dadurch gekennzeichnet, daß er eine Beaufschlagungsvorrichtung für den Hauptkörper (12) umfaßt, die gemäß Anspruch 1 ausgebildet ist.

**Claims**

1. Device for loading a main Platform member comprising at least one read/write transducer for a data carrier (14, 15), comprising at least one pair of flexible spring blades (10) of which each is secured to a rigid arm (4) by one of its extremities and at its other extremity supports a platform (12) comprising a main member (12a) and a suspension (12b), each of the flexible blades generating a loading force of the main member on to the carrier, and means (47, 46, 50, 40) for deformation of the pair of flexible blades permitting to exert on the first extremity of each of the blades, a force parallel to the surface of the carrier causing the flexing of the other extremity of the same, in such manner that the blade is displaced substantially perpendicular to the data carrier, characterised in that these deforming means are constituted by at least one wire (40) in contact by its first extremity (40a) with the first extremity (hole 43) of the flexible blades (10) and by its second extremity (40b) with means for controlling this wire (47, 46, 43, 50) which thus exert on the wire a traction force parallel to the surface of the carrier which is transmitted by this latter to the first extremity (hole 43) of the flexible blades (10).

2. Device according to claim 1, characterised in that the means of controlling the wire (40) comprise:
- a pivoting member (47) pivotally mounted on the extremity of the arm (4);
- levers (46) integral with the pivoting member (47), to which are secured the two extremities of the wire (40);
- means (50) for controlling in rotation the pivoting member (47).

3. Device according to claim 2, characterised in that the means for controlling in rotation the pivoting member (47) comprise a lever (50) integral with the pivoting member (47) of which the extremity cooperates with a cam profile integral with the carrier to cause the pivoting member (47) to pivot during the passage of the arm (4) into the "take-off" area, in such a manner as to exercise a traction on the extremities of the wire (40).

4. Loading device according to claim 3, characterised in that the lever (50) carries a stud (52) at its extremity, which is displaced within a groove (54) forming a cam.

5. Loading device according to claim 4, characterised in that the shape of the groove (54) forming the cam gives control over the speed of approach of the disc heads by means of the intervention of the pivoting member (47) and of the speed of opening of the loops.

6. Rotary actuator for the positioning of main members (12a) of platform (12) above a carrier (14) comprising a pivoting arm (4) displaced by a motor (M), characterised in that it comprises a device for loading the main members (12) constructed according to claim 1.

# FIG.1

# FIG.2a

# FIG.2b

# FIG.3

# FIG.4

# FIG.5

# FIG.6